Europäisches Patentamt

European Patent Office

Office européen des brevets

(11) Publication number: **0 216 114**
**A2**

# (12) EUROPEAN PATENT APPLICATION

(21) Application number: 86111272.0

(22) Date of filing: 14.08.86

(51) Int. Cl.⁴: **G11B 5/265**

(30) Priority: 28.08.85 JP 187227/85

(43) Date of publication of application:
01.04.87 Bulletin 87/14

(84) Designated Contracting States:
DE FR GB

(71) Applicant: **HITACHI, LTD.**
**6, Kanda Surugadai 4-chome Chiyoda-ku**
**Tokyo 100(JP)**

(72) Inventor: **Abe, Mitsuo**
**240-15, Nakamurahara**
**Odawara-shi(JP)**
Inventor: **Kishimoto, Kiyoharu**
**Konan Yurigaoka Haitsu 4-104 2308,**
**Shimonagayacho**
**Konan-ku Yokohama(JP)**
Inventor: **Ono, Hiroaki**
**Fujimiryo 1545, Yoshidacho**
**Totsuka-ku Yokohama(JP)**
Inventor: **Ohshima, Isao**
**Shonan Life Town B26-18 639-2, Endo**
**Fujisawa-shi(JP)**

(74) Representative: **Altenburg, Udo, Dipl.-Phys. et**
**al**
**Patent- und Rechtsanwälte**
**Bardehle-Pagenberg-Dost-Altenburg-Frohwi-**
**tter & Partner Postfach 86 06 20**
**D-8000 München 86(DE)**

(54) **Double azimuth thin film magnetic head and method of manufacturing same.**

(57) A double azimuth thin film magnetic head comprising a non-magnetic substrate (1), at least one non-magnetic layer (5) formed on the substrate, a magnetic central core member (3) and first and second side core members (2a, 2b) formed at least on the non-magnetic layer and a protection layer (7) over the core members. The center core member is sandwiched by the first and second side core members with first and second magnetic films (4a, 4b) interposed between the center core member and the first and second side core members, respectively, and has a generally U-shaped cross-section tapering such that the width of the central core member measured at a level is larger at another level farther from the non-magnetic layer than at the first-mentioned level. The non-magnetic layer formed on the substrate serves to determine the dimensions and the arrangement of the gaps and cores for the double azimuth thin film magnetic head. In the method of manufacturing double azimuth thin film magnetic heads, at least one multi-level non-magnetic layer (5) is formed on a non-magnetic substrate (1) which non-magnetic layer serves to determine the dimensions and the arrangement of the cores and gaps, and then magnetic central core member and magnetic side core members sandwiching the central core member are formed on the multi-level non-magnetic layer with non-magnetic films interposed therebetween, thereby providing track widths and gaps for the head with a high accuracy. The cross-section of the center core member is formed to be generally U-shaped and taper as described above.

**DOUBLE AZIMUTH THIN FILM MAGNETIC HEAD AND METHOD OF MANUFACTURING SAME**

## F I G . I

## DOUBLE AZIMUTH THIN FILM MAGNETIC HEAD AND METHOD OF MANUFACTURING SAME

### BACKGROUND OF THE INVENTION

This invention relates to a double-azimuth thin film magnetic head having two gaps with different azimuth angles, which is generally used in video tape recorders (VTR's), particularly used preferably for the special reproduction such as still picture reproduction, slow motion picture reproduction, etc., and relates to a method of manufacturing the thin film magnetic head.

The special reproduction in the VTR's free from unstable frame reproduction or noise requires a so-called double azimuth head which has two head portions with different azimuth angles, arranged in proximity to each other on the same locus of rotation on a head support. In the past, these head portions were previously separately fabricated as individual two heads with different azimuth angles, which were then bonded to each other in the final step. Therefore, the double azimuth head thus formed was not satisfactory in its fabrication process, in the dimensional accuracy and in the equivalency in performance between these two head portions, etc.

To obviate such problems, there have been proposed techniques in which two heads to be integrally are formed simultaneously using semiconductor thin film techniques, as disclosed in JP-A-60-47219 (laid open on March 14, 1985) and JP-A-60-59514 (laid open on April 5, 1985). According to these techniques, since the two heads are formed on a single substrate under the same conditions, the dimensional accuracy and the equivalency in the performance between the two heads are improved, thereby greatly enhancing the mass production of double azimuth thin film magnetic heads. However, to cope with long time recording, such a double azimuth head as having two head portions is required, in which they have different track widths with stepwise level differences between track edge defining portions of the gaps of the two head portions. Thus, a new technique capable of implementing such a double azimuth head with high accuracy has been strongly needed. In this connection, JP-A-61-39211 (laid open on February 25, 1986) discloses a double azimuth head with plural magnetic films formed on a non-magnetic substrate with non-magnetic films interposed therebetween, in which in order to prevent a pseudo gap from being formed in a central core member, a non-magnetic gap spacer film with the central core member thereon is formed in a generally U-shaped cross-section changing smoothly or continuously.

### SUMMARY OF THE INVENTION

An object of this invention is to provide a double azimuth thin film magnetic head that is suitable for special recording/reproduction and also for long or extended time recording/reproducing mode operations as well as ordinary recording/reproducing mode operation.

Another object of this invention is to provide a double azimuth head structure having two gaps with different azimuth angles, the track widths and the stepwise track edge differences (the stepwise level differences between track edge defining portions of the gaps of the two head portions) being able to be implemented with a high accuracy. The stepwise track edge differences are what is necessary to register the center lines of the two gaps in the tracking direction.

A further object of this invention is to provide a method for manufacturing double azimuth magnetic heads as mentioned above with a high accuracy.

In accordance with one aspect of this invention, dimensioning of a central core member and two side core members (all of these core members being made of e.g. soft magnetic layers) forming magnetic paths in a double azimuth thin film magnetic head is made such that the thicknesses of the side core members are smaller than the thickness of the central core member opposite thereto, thereby defining the track widths of the head. To provide the stepwise track edge differences (the stepwise level differences between track edge defining portions of the two gaps), at least one non-magnetic member (at least one underlying non-magnetic layer) with a thickness changing discontinuously near each gap position is arranged between central and side core members and the substrate supporting these core members.

The double azimuth magnetic head that can be operated in the long time recording/reproducing mode as well as in the ordinary recording/reproducing mode is disclosed in a copending prior application that was laid open on May 1, 1986 under JP-A-61-85614. In the magnetic head disclosed in this prior application, two gaps constituted by a central core member and two side core members sandwiching the central core member are so arranged that the distance between the two gaps measured in the tracking direction is smaller at a level than at another level farther from the non-magnetic substrate supporting the central core member and the side core members, and the track widths and the stepwise track edge differences are defined by the thickness and position of the central core member.

In accordance with another aspect of this invention, the distance between the above-mentioned two gaps is made larger at a level than at another level farther from the substrate. Generally speaking, the magnetic reluctance of the central core member is increased as its cross-sectional area becomes smaller, thus reducing the recording/reproducing efficiency of the head. Defining the distance between the gaps as above permits the thickness of the central core member to be made large without being limited by track widths (i.e., the thicknesses of the side core members), thus preventing undesirable increase of the magnetic reluctance of the central core member and so the decrease of the recording/reproducing efficiency of the head.

In accordance with a further aspect of this invention, the width of the central core member is made larger at its rear side portion spaced by a suitable distance from its recording medium abutting end than at its front side portion including the recording medium abutting end, facilitating a decrease of the magnetic reluctance of the central core member. This provides greater freedom of design of the central core member.

BRIEF DESCRIPTION OF THE DRAWINGS

Figs. I to 3 are perspective views of double azimuth thin film magnetic heads according to several embodiments of this invention.

Figs. 4a to 4i are diagrams showing a method of manufacturing a double azimuth thin film magnetic head according to one embodiment of this invention.

Figs. 5 and 6 are views of modified embodiments of this invention.

Fig. 7 is a view showing formation of a pseudo gap.

Figs. 8 and 9 are views of other modified embodiments of this invention.

DESCRIPTION OF THE PREFERRED EMBODIMENTS

All corresponding parts of the various figures of the drawings are designated by the same or like symbols.

Fig. I shows a double azimuth thin film magnetic head according to one embodiment of this invention, which is generally indicated by numeral 10. In this figure, numeral I denotes a non-magnetic substrate, 2a, 2b denote a pair of side core members made from layers of e.g. a soft magnetic material, formed generally in a "C" shape in a plane perpendicular to the recording medium abutting surface of the head 10, and 3 denotes a central core member made from a layer of e.g. a soft magnetic material, having a generally "I" shape. Side core members 2a and 2b are joined to or sandwiches the central core member 3 through two gap films 4a and 4b of a non-magnetic material. Between the lower surfaces of the side core members 2a, 2b and central core member 3 and the non-magnetic substrate I is provided a first non-magnetic layer, made of e.g., a non-magnetic metal, having a surface of three levels 5a, 5b and 5c. The first non-magnetic layer 5 serves to determine the dimensions and arrangement of the gap films 4a, 4b and the cores 2a, 2b and 3 so as to register the center lines of the two gaps of the head in the tracking direction. On the other hand, on the upper surfaces of the side core members are provided second non-magnetic layers 6a and 6b made of, e.g., a non-magnetic metal, respectively and the whole upper surfaces of the second non-magnetic layers are covered with a passivation or protection film 7. Numerals 8a and 8b denote winding toles through which two windings 9a and 9b are provided, respectively.

The components mentioned above will be explained in more detail. The non-magnetic substrate I may be made of crystallized glass or ceramic exhibiting high wear resistance, and has a shape of, e.g., approx. 2 mm by 2 mm square and 0.I -0.3 mm thick and has a thermal expansion coefficient of preferably $100 \times 10^{-7}$ -$130 \times 10^{-7}/°C$. Side core members 2a, 2b and central core member 3 are thin layers of an amorphous soft magnetic alloy - (containing cobalt). Alternately, these members may be made of Sendust. If the thicknesses of these core members are represented by $W_1$ for 2a, $W_2$ for 2b and $W_3$ for 3, $W_1$ and $W_2$ are set to be equal to desired corresponding track widths (e.g. I5 μm and 2I μm, respectively) and $W_3$ is set for a value larger than these values. The side core members 2a and 2b are nearer to the substrate I than the central core member 3 at their upper surface and the former are farther from substrate I than the latter at their lower surface. For example, $W_1$ and $W_2$ may be set for I0 to 30 μm and so $W_3$ may be set for a value larger than this value by I to I0 μm. The width $l$ of the central core member 3 measured at its central level is set for a predetermined gap interval, e.g. 0.3 to 0.6 mm. At least one of the central core member 3 and side core members 2a, 2b is formed in a multi-layer structure (or a laminate structure) in which thin magnetic layers are isolated by inter-layer materials (e.g. $SiO_2$) at intervals of e.g. 5 to 10 $\mu$m, thereby allowing the core loss at a video frequency range to be suppressed. However, as the case demands, all of the core members may be formed in a single layer structure. This applies to the other embodiments.

Gap films 4a and 4b made of, e.g. $SiO_2$, are set for 0.2 to 0.3 $\mu$m in their thickness. The directions of the gap planes, i.e., the planes of the non-magnetic gap films are made inclined by predetermined azimuth angles $\theta_1$ and $\theta_2$ with respect to the normal line to the non-magnetic substrate I, so that the distance between the gap films is larger at a level than at another level farther from the substrate. To this end, the central core member 3 has a generally U-shaped cross-section tapering such that the width of central core member 3 at a level is larger at another level farther from substrate I than at the first-mentioned level. $\theta_1$ and $\theta_2$ are set such that $\theta_1 = \theta_2 = 10°$. The non-magnetic gap films 4a and 4b are formed wholly in the direction perpendicular to the recording medium abutting surface of the head. However, only those portions of the gap films 4a, 4b which are nearer to the recording medium abutting surface of the head than the winding holes 8a, 8b are essential, so that the other portions may not be formed. Further, the gap films may be formed, for convenience of the manufacturing process, on the boundary between the central core member 3 and the surface portion of the first non-magnetic layer 5 having level 5c. Such formation of the gap films will not cause any undesirable effect on the performance of the head.

The first non-magnetic layer 5, made of a non-magnetic material such as, preferably chromium or zirconium, serves to determine the dimensions and the arrangement of the gap films 4a, 4b and core members 2a, 2b and 3. Assuming that the thicknesses corresponding to levels 5a, 5b and 5c are $T_1$, $T_2$ and $T_3$, respectively, $T_1$ and $T_2$ are set to provide desired stepwise track edge differences - (stepwise level differences between track edge defining portions of the two gaps), i.e., the difference $\Delta T = T_1 - T_2$ is determined so as to provide registration of the center lines of the two gaps corresponding to the track widths $W_1$ and $W_2$. Thus, $T_3$ is made smaller than $T_1$ and $T_2$. As an example, the thickness difference $\Delta T$ providing the stepwise track edge differences $\Delta T = 3$ $\mu$m can be obtained by setting $T_1 = 6$, $T_2 = 3$ and $T_3 = 1$ $\mu$m.

The second non-magnetic layers 6a and 6b, made of the same material as the first non-magnetic layer 5, are, for example, 1 to 10 $\mu$m thick. The thicknesses of these second non-magnetic layers 6a and 6b are preferably such that their upper surfaces are level with the upper surface of the central core member 3. This means that the overlying protection layer 7 provides a plane upper surface which will facilitate attachment or mounting of the head onto another member. Protection layer 7, made of a material having high wear resistance such as alumina or forsterite, is 30 to 50 $\mu$m thick.

In accordance with this embodiment, side core members 2a and 2b are so formed that their thicknesses are equal to desired track widths $W_1$ and $W_2$, respectively, and the central core member 3 is so formed that its thickness $W_3$ is larger than the track widths $W_1$ and $W_2$ and its upper surface is farther from the substrate I than the upper surfaces of the side core members 2a, 2b while its lower surface is farther from the substrate I than the lower surfaces of the side core members. Further, $T_1$, $T_2$ and $T_3$ corresponding to levels 5a, 5b and 5c of the first non-magnetic layer 5 are so set that $T_1$ and $T_2$ provide the desired stepwise track edge differences by properly determining $\Delta T = T_1 - T_2$, and $T_3$ is smaller than $T_1$ and $T_2$. Thus, the values of the track widths and the stepwise track edge differences which are required for the double azimuth head are uniquely determined by the thicknesses of the side core members 2a and 2b and those of first non-magnetic layer 5 at levels 5a and 5b. All these values can be realized with a considerably high accuracy by means of a thin-film technique, which will be described later.

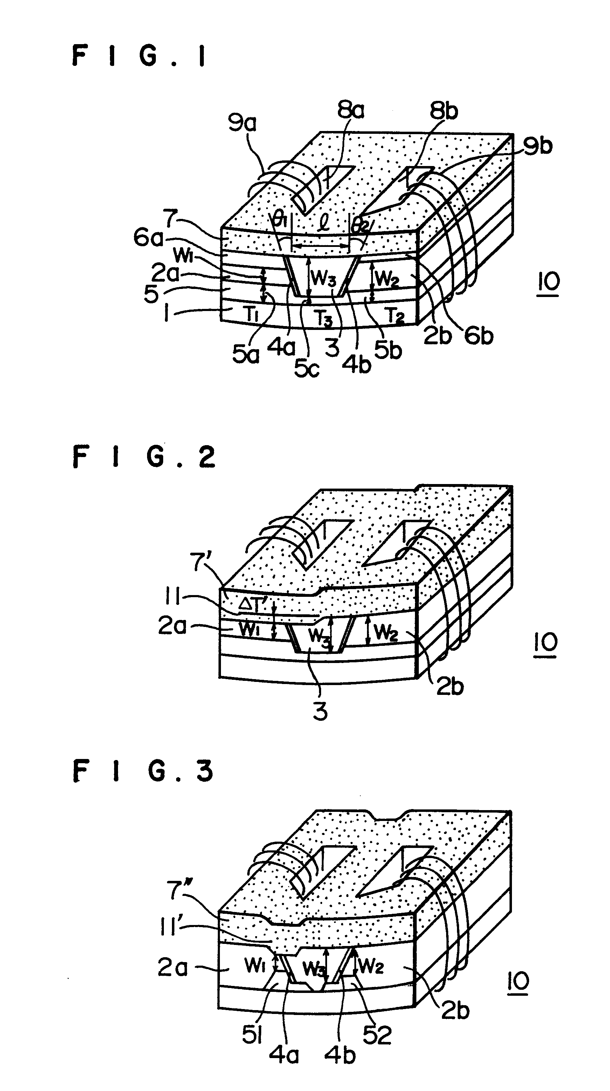

Fig. 2 shows a double azimuth thin film magnetic head according to another embodiment of this invention. Its structure is the same as that of Fig. I except that the second non-magnetic layers 6a and 6b in Fig. I are omitted, and the upper surfaces of the side core members 2a, 2b and parts of the central core member 3 are made to coincide with each other at the upper ends of the gap films 4a and 4b. A protection layer 7' covers the cores 2a, 3 and 2b and the upper ends of the gap films. In this embodiment, one track width $W_1$ is realized by providing an upper stepwise displacement portion II as required, which includes one gap and reaches the central core member 3, and its thickness $\Delta T'$. Also in this embodiment, the track widths can be realized with a high accuracy by providing the above upper stepwise displacement portion using the thin film technique such as ion etching.

Fig. 3 shows a double azimuth thin film magnetic head according to a further embodiment of this invention. In this embodiment, two first non-magnetic layers 51 and 52 are limitedly provided in the neighborhood of the gaps together with an upper stepwise displacement portion II', and the core member thicknesses $W_1$, $W_2$ and $W_3$ and the thicknesses of the two non-magnetic layers 51, 52 are set for predetermined values that are defined by the desired arrangement of the gaps. More specifically, the non-magnetic layers 51 and 52 are

5

formed on the substrate I spaced apart from each other, and the non-magnetic layer 5I has a surface with two levels adjoining to a part of the side core member 2a, gap 4a and a part of the central core member 3, while the other non-magnetic layer 52 has a surface with two levels adjoining to another part of the central core member 3, gap 4b and the side core member 2b. A protection film 7" is provided on the core members 2a, 3 and 2b and the upper ends of gaps 4a and 4b as in the embodiment of Fig. 2.

Also in accordance with this embodiment, the track widths and stepwise track edge differences can be realized with a high accuracy as in the embodiments mentioned above. Further, the recording/reproducing efficiency of the head can be improved since the magnetic circuit at the gap portions is formed in a more confined structure than at the other portions so as to provide a smaller cross-sectional area of the magnetic flux path.

Thus, three embodiments of a double azimuth thin film magnetic head according to this invention have been explained, but it is apparent to those skilled in the art that double azimuth thin film magnetic heads of this invention can also be implemented in combination of these three embodiments and in several modified structures of the first and second non-magnetic layers and the upper stepwise displacement portion.

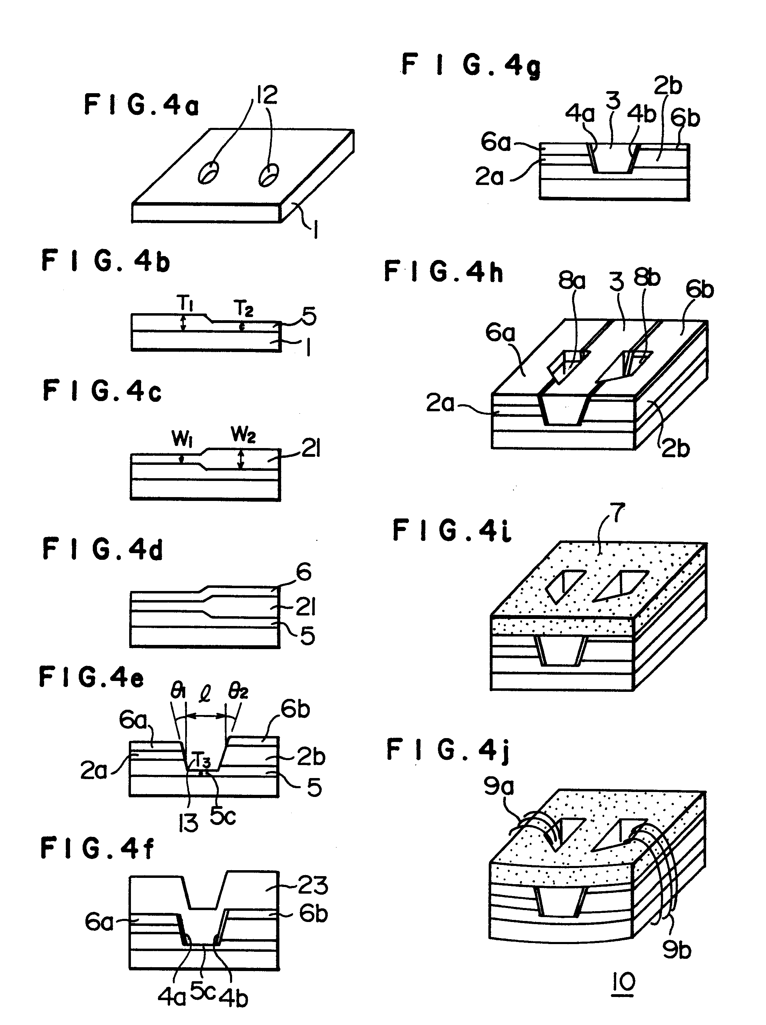

A method of manufacturing double azimuth thin film magnetic heads according to the one embodiment of this invention will be explained with reference to Figs. 4a to 4j. For simplicity of explanation only one head is illustrated in these figures, but actually a number of heads can be simultaneously manufactured from one or more substrates.

Step (a). Winding holes I2 are made in a non-magnetic substrate I by means of machining - (cutting) or photo-etching when the non-magnetic substrate I is a photo-sensitive glass (Fig. 4a).

Step (b). A first non-magnetic layer 5 is formed on the substrate I through sputtering. Then, a stepwise displacement is given to the surface of the first non-magnetic layer through masked sputtering or etching so as to provide the thicknesses $T_1$ and $T_2$ of the layer 5. $T_1$ and $T_2$ can be controlled with an accuracy in the order of I $\mu$m error or less by controlling the sputtering or etching time. (Fig. 4b)

Step (c). A layer 2I made of, e.g., a soft magnetic alloy, serving as side core members, is formed through sputtering. This layer may be formed in a magnetic layer-non-magnetic layer laminate structure with the non-magnetic layers serving as inter-layers made of, e.g., $SiO_2$. Then, a stepwise displacement is given to the layer 2I through masked sputtering or etching so as to provide the core thicknesses $W_1$ and $W_2$. $W_1$ and $W_2$ can also be controlled with an accuracy in the order of I $\mu$m error or less (Fig. 4c).

Step (d). A second non-magnetic layer 6 having a thickness larger than the upper stepwise displacement in (i.e., the level difference between the upper surfaces of) the layer 2I (side core members 2a, 2b) is formed through sputtering (Fig. 4d).

Step (e). A generally U-shaped channel I3 is formed at the portion where a central core member is to be formed. The layer 2I is separated by the channel I3 into first and second magnetic layer portions serving as side core members 2a and 2b. In this case, it is necessary to provide the side walls of the channel with excellent surface finish and linearity, and to provide, with a high accuracy, a channel width $\underline{l}$ and inclination angles $\theta_1$ and $\theta_2$ formed by the side walls and normal lines to the channel bottom wall. This can be realized using diamond cutting tool means and more effectively realized through a combination of ion-etching used for coarse machining and diamond cutting tool means used for finishing. Then, the channel depth is so set, for the purpose of reducing load onto the diamond cutting tool means, that the channel bottom wall is intruded in the first non-magnetic layer 5 so as to leave a thickness $T_3$ (Fig. 4e).

Step (f). Non-magnetic films of e.g. $SiO_2$ are deposited on the side walls of the channel I3 through sputtering so as to provide gaps 4a and 4b; those non-magnetic films may be deposited also on the first non-magnetic layer 5 at the channel bottom wall and second non-magnetic films 6a, 6b, though not shown. Thereafter, a layer 23 of, e.g., a soft magnetic alloy is formed on the entire surface of the resultant assembly. This layer 23 or the central core member 3 may be formed in a magnetic layer-non-magnetic layer laminate structure with the non-magnetic layers serving inter-layers made of, e.g., $SiO_2$ (Fig. 4f).

Step (g). Those portions of the magnetic layer 23 which are located on the side core members 2a and 2b are removed to provide a flat surface by lapping it until the second non-magnetic layer portions 6a and 6b on both side core members are exposed. Thus, the central core member 3 is formed (Fig. 4g).

Step (h). Winding holes 8a and 8b are made through etching at positions where the holes 8a and 8b communicate with the winding holes I2 previously made in the non-magnetic substrate I in Step (a). The shapes of winding holes 8a and 8b are not necessarily identical with those of the winding holes I2. In this embodiment, winding holes 8a and 8b are formed in trapezoids that are slightly larger than the holes I2 (Fig. 4h).

Step (i). A protection film 7 is coated on the resultant surface except the winding holes 8a and 8b through sputtering or vacuum evaporation (Fig. 4i).

Step (j). The recording meidum abutting end of the resultant head assembly is roundly lapped, and finally windings 9a and 9b are provided. (Fig. 4j)

Thus, a double azimuth thin film magnetic head as shown in Fig. I is completed. The heads as shown in Figs. 2 and 3 can be also manufactured in the same manner as mentioned above by providing some modifications to the above steps. Such modifications may be apparent to those skilled in the art and so their explanation will be omitted. In the process mentioned above, the thicknesses of the first and second non-magnetic layers and side core members can be controlled with an accuracy within ± I $\mu$m, and so the desired track widths and the stepwise track edge differences can be realized with an accuracy as high as ± I $\mu$m or so. Therefore, the double azimuth magnetic head according to this invention leads to a high performance VTR that allows a long time recording and reproduction and special recording/reproduction (such as of still pictures and slow motion pictures) with suppressed reproduction instability and suppressed noise.

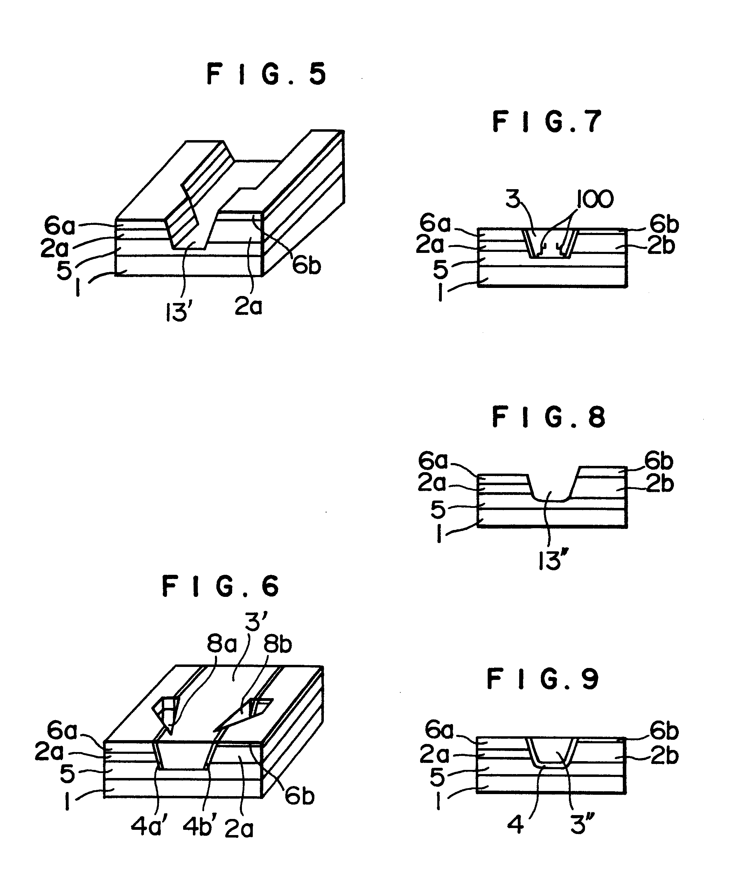

Modified forms of the channel and central core member will be explained with reference to Figs. 5 to 6 and Figs. 7 to 9.

Fig. 5 shows a modified form I3' of the channel made by the step of Fig. 4e. As seen from the figure, the channel I3' is formed to have a larger width at the portion apart by a suitable distance from the recording medium abutting end of the head, i.e., its rear side portion than its front side portion continuing from the rear side portion and serving to form the gaps. This form of the channel permits the central core member 3 formed therein to be reduced in its magnetic reluctance, thereby enhancing the recording and reproducing efficiency of the head. Fig. 6 shows a perspective view of the head with a central core member 3' formed in the channel I3', corresponding to the step shown in Fig. 4h. As seen from Fig. 6, the central core member 3' is also constituted by a front side portion abutting the recording medium and a rear side portion having a larger width than that of the front side portion. Numerals 4a' and 4b' are non-magnetic films formed to provide the gaps on both side walls of central core member 3'.

Another modified form I3" of the channel and the corresponding central core member 3" are shown in Figs. 8 and 9, respectively. This channel I3" is characterized in that its bottom wall is substantially continuous with its both side walls. The reason why the channel I3" is formed as such will be explained below.

Formation of the channel I3 using diamond cutting tool means at the step shown in Fig. 4e provides its side walls and bottom wall that are joined with each other with rather a sharp edge thereby to form boundary lines therebetween. The central core member formed in such a channel, which is obtained by providing magnetic layer 23 through vacuum evaporation and sputtering (Fig. 4f) and flattening the layer 23 (Fig. 4g), may produce discontinuous planes I00 as diagramatically shown in Fig. 7 since the magnetic layer grows in different directions starting from the side walls and bottom wall of the channel. Such discontinuous planes might, in some cases, generate pseudo gaps, reducing the performance of the head.

The provision of such pseudo gaps can be prevented by forming such a channel as having its side walls and bottom wall causing no substantial boundary lines, i.e. they are continuous with each other, in the step of forming the channel I3 as shown in Fig. 4e. In Fig. 8 is shown a channel I3" formed by the use of diamond cutting means having a desired blade shape or through ion-milling so that the side walls and bottom wall are continuous with each other.

Fig. 9 shows the gap layer 4 formed on the side walls and bottom wall of channel I3" shown in Fig. 7 and a central core member 3" formed on the gap layer.

It will be apparent to those skilled in the art that the head can also be manufactured in suitable combinations of the shapes of the channel and the non-magnetic layers serving as the gaps, as shown in Figs. 5 to 6 and Figs. 8 to 9.

It is needless to say that the above-described modified embodiments with respect to Figs. 5, 6, 8 and 9 enjoy similar functional effect and advantages to those described in connection with the embodiments shown in Figs. I-3 and Figs. 4a -4j.

It should be particularly noted that, in the present invention, the central core member of the head has a large freedom of design mainly because the thickness of the central core member can be determined without being limited by the thicknesses of the side core members, and the rear portion of the central core member may be made to have a larger width than the front portion to reduce its magnetic reluctance.

## Claims

I. A double azimuth thin film magnetic head including two head portions having gaps with different azimuth angles, comprising:

a single non-magnetic substrate (I);

at least one non-magnetic layer (5) formed on said substrate, said non-magnetic layer serving to determine the dimensions and the arrangement of the gaps and cores for the two head portions;

a magnetic central core member (3) and first and second magnetic side core members (2a, 2b) formed at least on said non-magnetic layer (5), respectively, in such a manner that said central core member is sandwiched by said first and second side core members with first and second non-magnetic films (4a, 4b) interposed between said first side core member and said central core member and between said central core member and said second side core member, respectively, said central core member having a generally U-shaped cross-section tapering such that the width of said central core member measured at a level is larger at another level farther from said non-magnetic layer than at the first-mentioned level, said central core member, first and second side core members and first and second non-magnetic films constituting the gaps with different azimuth angles for the two head portions; and

a protection layer (7, ll, ll') formed over said central core member, the exposed ends of said first and second non-magnetic films and said first and second side core members.

2. A double azimuth thin film head according to Claim I, in which said at least one non-magnetic layer is constituted by a single non-magnetic layer (5) having a surface with mutually different first, second and third levels adjoining to said first side core member (2a), central core member (3) and second side core member (2b), respectively, said second level being nearer to said substrate than both of said first and third levels so that said single non-magnetic layer has a generally U-shaped cross-section with said central core member and said first and second non-magnetic films resting on said second level of said single non-magnetic layer.

3. A double azimuth thin film head according to Claim I, further comprising second non-magnetic layers (6a, 6b) formed between said central and side core members (3, 2a, 2b) and said protection layer (7, ll, ll').

4. A double azimuth thin film head according to Claim I, in which said at least one non-magnetic layer includes first and second non-magnetic layers (5l, 52) formed on said substrate (I) in a spaced relationship, said first non-magnetic layer (5l) having a surface with first and second levels adjoining to a part of said first side core member (2a), said first non-magnetic film (4a) and a first part of said central core member (3) while said second non-magnetic layer (52) has a surface with third and fourth levels adjoining to a second part of said central core member (3), said second non-magnetic film (4b) and a part of said second side core member (2b), so that said first and second side core members and said central core member are partly on said substrate.

5. A double azimuth thin film magnetic head according to Claim I, in which said central core member (3') is constituted by a front side portion serving to abut a recording medium and a rear side portion continuing from said front side portion, the width of said rear side portion is larger than that of said front side portion to thereby reduce the magnetic reluctance of the central core member.

6. A double azimuth thin film head according to Claim 2, in which said generally U-shaped cross-section of said single non-magnetic layer has its side walls substantially continuous with its bottom wall.

7. A method of manifacturing double azimuth thin film magnetic heads each including two head portions having gaps with different azimuth angles, comprising the steps of:

preparing a non-magnetic substrate (I);

forming a multi-level non-magnetic layer (5) on said substrate;

forming a first magnetic layer (2I) on said multi-level non-magnetic layer;

decreasing the thickness of a part of said first magnetic layer to determine the central plane for said first magnetic layer, said central plane being perpendicular to the thicknesswise direction of said first magnetic layer;

forming a channel passing through said first magnetic layer and intruding into said multi-level non-magnetic layer so that said first magnetic layer is separated into two first magnetic layer portions (2a, 2b) having different thicknesses, said channel tapering in such a manner that the distance between the side walls of said channel is larger at a level in said channel than at any other level farther from the bottom wall of said channel than at the first-mentioned level;

coating a non-magnetic film (4a, 4b) at least on each of said side walls of said channel;

forming a second magnetic layer at least to fill said channel with said side walls coated with said non-magnetic films, so that one (2a) of said two first magnetic layer portions, the non-magnetic film (4a) coated on that one of said side walls which includes said one first magnetic layer portion and said second magnetic layer (3) constitute a first head portion having a first azimuth angle while the other first magnetic layer portion (2b), the non-magnetic film (4b) coated on the other side wall which includes said other first magnetic layer portion and said second magnetic layer (3) constitute a second head portion having a second azimuth angle, the track widths of said first and second head portions being defined by said different thicknesses of said two first magnetic layer portions; and

forming a protection layer over said first and second magnetic layers and said non-magnetic film.

8. A method according to Claim 7, in which said multi-level non-magnetic layer (5) is formed by depositing a non-magnetic layer having a uniform thickness on said substrate and partly etching said non-magnetic layer of a uniform thickness.

9. A method according to Claim 7, in which said multi-level non-magnetic layer (5) is formed by depositing a non-magnetic layer by masked sputtering.

10. A method according to Claim 7, in which said first magnetic layer (21) is formed by alternately laminating thin films of a magnetic material and thin films of a non-magnetic material on said multi-level non-magnetic layer.

11. A method according to Claim 7, in which said channel is formed by the use of diamond cutting tool means.

12. A method according to Claim 7, in which said channel is formed by the use of a combination of ion-etching and diamond cutting tool means.

13. A method according to Claim 7, in which said second magnetic layer (3) is formed by alternately laminating thin films of a magnetic material and thin films of a non-magnetic material at least to fill said channel.

14. A method according to Claim 7, in which said channel is formed such that the bottom wall is sub stantially continuous with both of the two side walls.

15. A method according to Claim 7, in which said channel (13') is formed to have a width larger at its rear side portion than at its front side portion continuing from said rear side portion and serving to form said gaps.

# F I G . 1

# F I G . 2

# F I G . 3

0 216 114

FIG.4a

12

1

FIG.4g

4a  3  4b  2b
6a                    6b
2a

FIG.4b

T₁   T₂   5
1

FIG.4h

8a  3  8b  6b
6a
2a
2b

FIG.4c

W₁   W₂   21

FIG.4d

6
21
5

FIG.4i

7

FIG.4e

θ₁  ℓ  θ₂
6a            6b
2a            2b
T₃       5
13  5c

FIG.4f

23
6a            6b
4a 5c 4b

FIG.4j

9a

9b

10

F I G . 5

F I G . 7

F I G . 8

F I G . 6

F I G . 9